# EUROPÄISCHE PATENTSCHRIFT

(11) **EP 1 792 090 B1**
(45) Veröffentlichungstag und Bekanntmachung des Hinweises auf die Patenterteilung: **08.04.2009**
(21) Anmeldenummer: 05781768.6
(22) Anmeldetag: 19.08.2005
(51) Int. Cl.: F16C 3/03, F16D 3/06, B62D 1/19

(54) **WELLENANORDNUNG**
SHAFT ASSEMBLY
SYSTEME DE TUBE

(30) Priorität: 07.09.2004 DE 102004043621
(43) Veröffentlichungstag der Anmeldung: 06.06.2007
(73) Patentinhaber: Volkswagen Aktiengesellschaft, 38436 Wolfsburg (DE)
(72) Erfinder: NEUGEBAUER, Lüder, 30625 Hannover (DE); MARETZKE, Jürgen, 38550 Isenbüttel (DE); LINZMEIER, Jürgen, 38518 Gifhorn (DE); VOIGT, Matthias, 39340 Nordgermersleben (DE)
(86) Internationale Anmeldenummer: PCT/EP2005/008975
(87) Internationale Veröffentlichungsnummer: WO 2006/027094

(56) Entgegenhaltungen:
- EP-A- 1 031 747
- DE-A1- 4 119 359
- US-A- 6 099 036
- US-B1- 6 186 697

## Beschreibung

Die Erfindung betrifft eine Wellenanordnung gemäß dem Oberbegriff des Patentanspruchs 1.

Gattungsgemäße Wellenanordnungen werden beispielsweise beschrieben in den Dokumenten US 6,279,221 und US 6,193,612. In diesem Zusammenhang wird auch auf eine Veröffentlichung hingewiesen, mit dem Titel "Slip-In-Tube-Gelenkwellen" Technologie (12. Aachener Kolloquium Fahrzeug- und Motorentechnik 2003, Seiten 1485 bis 1495). Eine Zielsetzung der dort beschriebenen Wellenanordnung besteht darin, dass im Crashfall das Kolabierverhalten optimiert werden soll. Vorgeschlagen wird hierzu, dass bei einer unfallbedingten Zusammenschiebung die Aufprallenergie zumindest teilweise durch gezielte Verformung absorbiert wird. Dazu wird beispielsweise ein inneres Wellenelement aus der Verzahnung heraus in einen Verjüngungsbereich eines äußeren Wellenelementes getrieben. Durch die Bewegung in den Verjüngungsbereich hinein wird dem inneren Wellenelement eine Verformung aufgezwungen, die letztlich zu Brüchen im Endbereich des inneren Wellenelementes führt.

Der Erfindung liegt die Aufgabe zugrunde, eine Wellenanordnung bereit zu stellen, durch die insbesondere für allradgetriebene Fahrzeuge bei Frontalaufprallunfällen eine Reduzierung der Insassenbelastung möglich ist.

Diese Aufgabe wird gelöst mit einer Wellenanordnung gemäß den Merkmalen des Patentanspruchs 1. Die Unteransprüche betreffen besonders zweckmäßige Weiterbildungen dieser Erfindung.

Abweichend von der bisherigen Auslegungsphilosophie mit gezielter Energieabsorption beim crashbedingten Kollabieren der teleskopierbaren Wellenelemente wird nun erfindungsgemäß vorgeschlagen, dass eine auf den Normalbetrieb des Fahrzeuges ausgelegte Axialfixierung vorgesehen wird, die bei einem Fahrzeugunfall nach Erreichen einer vorgegebenen Stoßkraft wirkungslos ist, also beispielsweise bricht, reißt, abschert oder dergleichen. Diese nach Art einer Sollbruchstelle ausgeführte Axialfixierung behindert nach ihrer Wirkungslosigkeit nicht mehr das Zusammenschieben der Wellenelemente ineinander, sondern erlaubt unter der Wirkung der Stoßkraft ein reibungsarmes Teleskopieren der Wellenelemente. Eine typische Größenordnung für die Auslegung der Axialfixierung kann ein Grenzkraftbetrag von beispielsweise 5 bis 40 KiloNewton sein. Erreicht bei einem Crash die Stoßkraft diesen vorgegebenen Grenzkraftbetrag, wird die Axialfixierung aufgehoben und der Stoßkraft damit ein geringerer Widerstand entgegengesetzt. Der Begriff reibungsarm ist hier so zu verstehen, dass auch Kraftbeträge von weniger als 50% bis 10 % des für die Axialfixierung ausgelegten Grenzkraftbetrages ausreichend sind, um die Wellenelemente relativ zueinander zu bewegen.

Eine derartig ausgelegte Wellenanordnung, insbesondere für eine vordere Kardanwelle in einem allradgetriebenen Fahrzeug mit quer eingebautem Frontmotor, ist von Vorteil, weil durch jeglichen Verzicht auf Verformung in der Wellenanordnung keine Gefährdung durch ausknickende und wegbrechende Bauteile gegeben ist. Damit wird eine Intrusion solcher Bauteile in den Fahrgastraum sicher vermieden.

Die Axialfixierung selbst kann bevorzugt auch dafür genutzt werden, dass gleichzeitig eine exakte Ausrichtung der Wellenachsen zueinander sichergestellt ist. In vorteilhafter Weise wird eine solche exakte Ausrichtung beispielsweise durch Pressungen zwischen Zahnkopf und Zahnfuß in der Verzahnung mindestens eines der beiden Wellenelemente erreicht.

Zur Erhöhung der Lebensdauer erfindungsgemäßer Wellenanordnungen ist außerdem vorgesehen, dass in einem sich zwischen den Wellenelementen ergebenden Ringspalt eine Abdichtung eingebracht wird, die beispielsweise als Dichtring oder als ein gestaltloses Dichtmittel nach Art einer Paste oder eines Gels ausgeführt ist. Das Dichtmittel selbst kann auch durch einen Kleber realisiert sein, der damit zugleich auch die Funktion der Axialfixierung übernimmt. Ergänzend oder alternativ kann zur Axialfixierung auch ein zwischen beide Wellenelemente einpassbares Einsatzteil vorgesehen werden, dem bevorzugt auch ein Dichtelement zugeordnet ist.

Für eine hohe Lebensdauer der gesamten Wellenanordnung wird bevorzugt die Verzahnung durch Kaltumformung, beispielsweise Kaltwalzen, eingebracht.

Ein besonders vorteilhaftes Ausführungsbeispiel der Erfindung ist in der Zeichnung dargestellt. Es zeigt
- Figur 1:: Eine typische Einbausituation für eine erfindungsgemäße Wellenanordnung in einem Fahrzeug,
- Figur 2:: Am Beispiel einer Kardanwelle eine erfindungsgemäße Wellenanordnung vor dem Zusammenbau,
- Figur 3:: Die Wellenanordnung gemäß Figur 2 im zusammengebauten Zustand,
- Figur 4:: Eine Draufsicht auf einen in Figur 3 mit Strichlinien markierten Abschnitt,
- Figur 5:: In einem Teilschnitt die Innenansicht für zwei zusammengebaute Wellenelemente,
- Figur 6:: Einen Ausschnitt für einen in Figur 5 mit durchgezogenen Linien markierten Abschnitt,
- Figur 7:: Eine erste Längswulst in einer der Verzahnungen sowie weitere Axialfixierungen in den Figuren 7a und 7b ,
- Figur 8:: Eine Ansicht gemäß Schnitt VIII-VIII in Figur 7,
- Figur 9:: Eine weitere Axialfixierung mittels Pressung zwischen Zahnkopf und Zahnfuß.
- Figur 10:: Eine weitere Axialfixierung mittels eines Einsatzteils

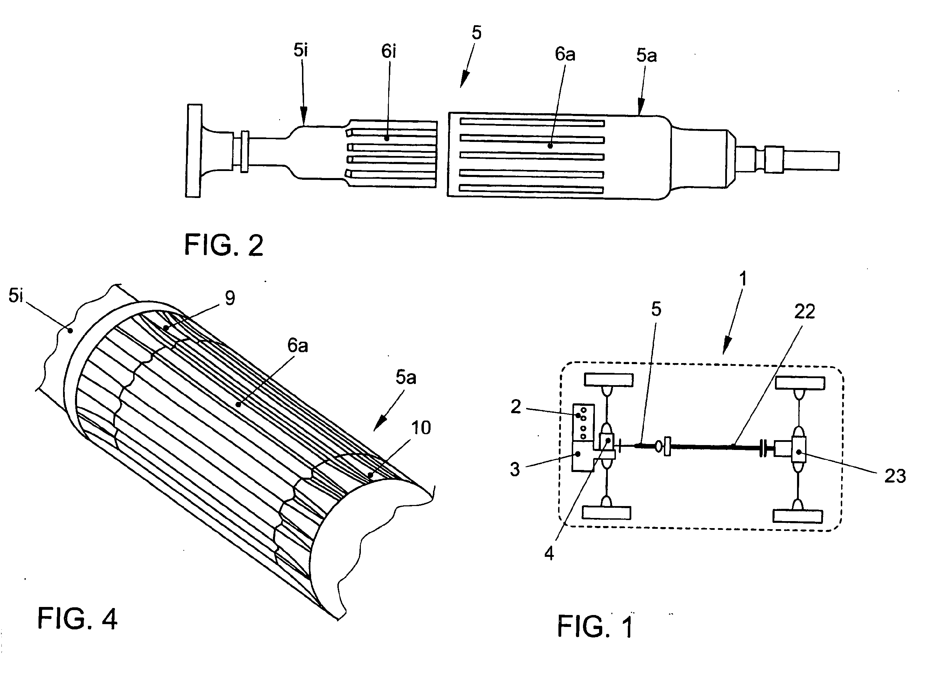

Figur 1 zeigt schematisch ein insgesamt mit 1 bezeichnetes Fahrzeug, dessen wesentliche Elemente des Antriebsstranges hier ein Verbrennungsmotor 2, ein Getriebe 3, das Differential 4, eine vordere Kardanwelle 5, eine hintere Kardanwelle 22, ein hinteres Differential 23 sowie nicht weiter bezifferte Gelenkwellen und Räder sind. Der bevorzugte Anwendungsfall für die Erfindung ist hier die vordere Kardanwelle 5, deren Aufbau im Einzelnen nun näher erläutert wird.

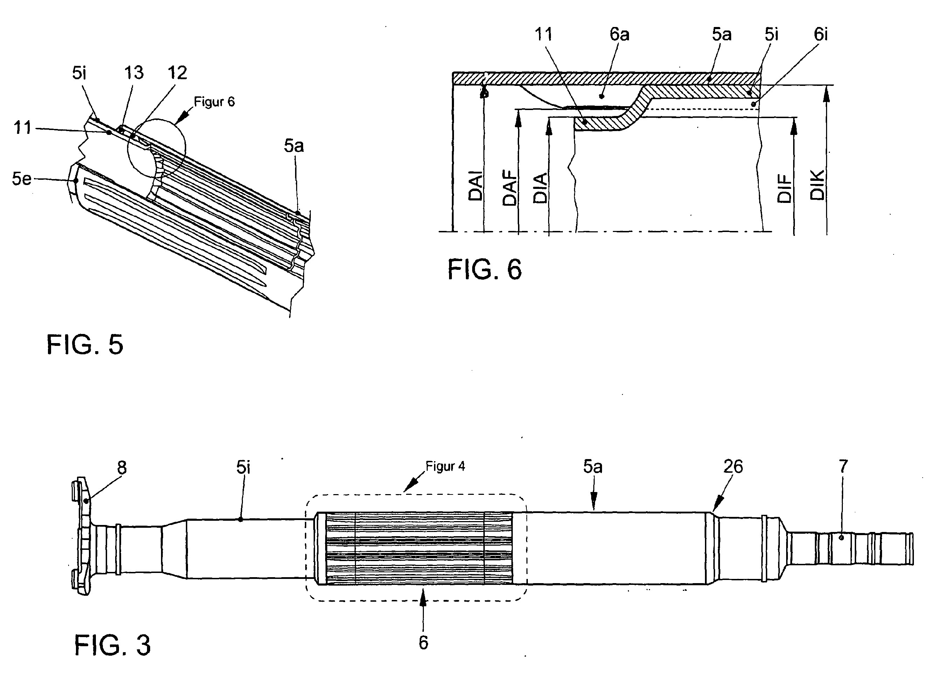

So zeigt beispielsweise Figur 2 als wesentliche Elemente der vorderen Kardanwelle 5 ein inneres Wellenelement 5i mit einer inneren Verzahnung 6i und ein äußeres Wellenelement 5a mit einer äußeren Verzahnung 6a. Die Verzahnungsabschnitte 6i und 6a bilden gemeinsam die in Figur 3 ersichtliche Schiebeverzahnung 6. Das rohrförmig ausgebildete Wellenelement 5a weist eine Verjüngung 7 zur Anbindung an ein Gelenk oder eine Gelenkscheibe auf. Das innere - bevorzugt hier auch als Hohlrohr ausgeführte - Wellenelement 5i weist an seinem der Schiebeverzahnung 6 abgewandten Ende einen Anschlussflansch 8 zur Anbindung an ein Gelenk oder eine Gelenkscheibe auf. Für die Erfindung wesentlich ist hier jedoch die Ausführung der Schiebeverzahnung 6, von der in Figur 4 eine Draufsicht auf die Verzahnung 6a erkennbar ist.

Wesentlich für den Verzahnungsabschnitt 6a sind Verzahnungsausläufe 9 und 10, die sich fertigungstechnisch besonders leicht herstellen lassen und insbesondere im Bereich des Verzahnungsauslaufes 9 auch die Montage für das einzuschiebende innere Wellenelement 5i erleichtert. Unterhalb des Verzahnungsauslaufs 9 ergibt sich zusammen mit einem hier verzahnungsfreien Abschnitt 11 des inneren Wellenelementes 5i ein Ringspalt 12, der zumindest im Bereich eines freien Endes 5e des äußeren Wellenelementes 5a zumindest teilweise mit einem Dichtmittel 13 ausgefüllt ist. Die Verzahnung 6i läuft am - nicht weiter bezifferten - freien Ende des inneren Wellenelementes 5i offen aus und ist so besonders leicht herstellbar, beispielsweise durch Kaltformung wie Kaltwalzen.

Die Skizze in Figur 6 verdeutlicht, auf welche Weise nach Aufhebung der Axialfixierung das reibungsarme Teleskopieren der Wellenelemente 5a und 5i möglich wird. So ist beispielsweise für das innere Wellenelement 5i der Außendurchmesser DIA des verzahnungsfreien Abschnittes 11 kleiner als der Fußkreisdurchmesser DAF am äußeren Wellenelement 5a. Korrespondierend ist der Durchmesser DAI innerhalb des äußeren Wellenelementes 5a größer als der Kopfkreisdurchmesser DIK am inneren Wellenelement 5i und der Fußkreisdurchmesser DAF am äußeren Wellenelement größer als der Fußkreisdurchmesser DIF am inneren Wellenelement 5i. Mit diesen Gestaltungsmerkmalen werden reibungsarme Relativbewegungen zwischen den Wellenelementen 5i und 5a ermöglicht, die hinsichtlich ihrer Ausdehnung durch eine als Axialanschlag wirksame Verjüngung 26 an dem äußeren Wellenelement 5a begrenzbar sind. Der Abstand dieser Verjüngung 26 ist so gewählt, dass auch bei maximalem Verschiebeweg der Schiebeverzahnung 6 dieser Anschlag nicht erreicht wird, sondern erst dann, wenn die Wellenanordnung ausgebaut würde.

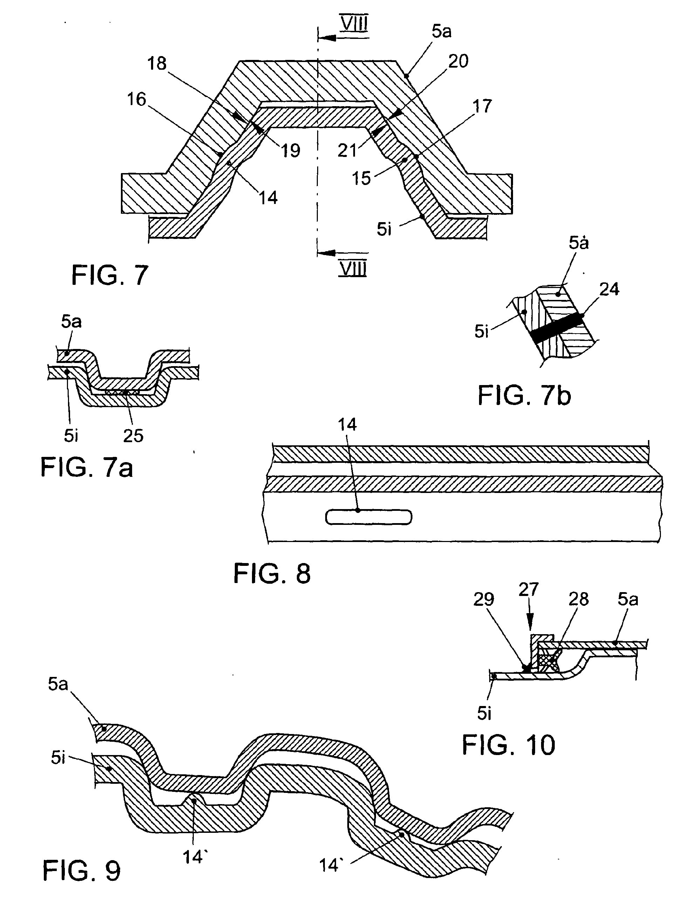

Als Beispiel für eine Axialfixierung sind in Figur 7 Wülste 14 und 15 gezeigt, die hier nach Art einer Längswulst beispielsweise durch Verstemmung, Fließpressen, Rollen oder Drücken oder dergleichen erzeugt worden sind. Durch diese Längswülste 14, 15 im inneren Wellenelement 5i kommt es zu Eindrückungen und daraus resultierenden Hinterschneidungen 16, 17 im äußeren Wellenelement 5a, so dass über diese aus Form- und Reibschluss gewählte Kombination einer Axialfixierung erreicht wird. In kinematischer Umkehr können derartige Wülste aber auch von außen in das äußere Wellenelement 5a eingeprägt werden, so dass sich eine vergleichbare Haltewirkung ergibt. Für die erfindungsgemäße Wellenanordnung von besonderer Bedeutung ist auch die in Figur 7 angedeutete nahezu vorhandene Spielfreiheit zwischen den Zahnflanken 18, 19 einerseits und 20, 21 andererseits. Hierdurch wird sichergestellt, dass die vordere Kardanwelle 5 nicht klappert (weil Verdrehspiel und Kippspiel minimiert sind) oder unnötig verschleißt und bei einem unfallbedingten Teleskopieren der Wellenelemente 5a, 5i eine definierte Führung gewährleistet ist. Bevorzugt für diese nahezu spielfreie Auslegung wird ein Verdrehspiel von 0 bis 0,5 mm zwischen den Zahnflanken 18,19 bzw. 20,21 für Wellendurchmesser zwischen 60 mm und 70 mm.

Ergänzend oder alternativ zu den Wülsten 14,15 können punktförmig oder großflächig auch aushärtbare Kunststoffe, Klebungen oder Schweißungen 25 (siehe Fig. 7a) und/oder Scherstifte 24 (siehe Fig. 7b) vorgesehen sein. Als Reibschlussvariante sind auch Längswülste 14' vorstellbar, die an dem Zahnfußbereich (siehe Fig. 9) oder an den Zahnkopfbereich (hier nicht dargestellt) materialeinheitlich angeformt oder aufgetragen werden können.

Als weitere Ausführungsform für eine Axialfixierung zeigt Figur 10 ein Einsatzteil 27, das hier an dem Wellenelement 5a befestigt und über einen Klemmkörper 28 und ein Dichtelement 29 das innere Wellenelement 5i beaufschlagt. Auch hier kann hinsichtlich der Festlegung des Einsatzteils und der Funktionen Dichtung und Klemmung eine kinematische Umkehr in Betracht gezogen werden. Je nach Auslegung können auch zusätzlich Hinterschneidungen oder Nuten in den Wellenelementen 5a, 5i vorgesehen sein, um definierte Axialfixierungen und Dichtverhältnisse sicherzustellen.

Die Wülste 14, 14', 15 können hinsichtlich ihrer Länge, Breite und Höhe/Tiefe oder Querschnittsgestalt so gewählt werden, dass zum einen eine definierte Grenzkraft eingestellt werden kann und zum anderen auch über dem Verschiebeweg der Schiebeverzahnung 6 hinweg eine ganz bestimmte Kennung vorgebbar ist. Erfindungsgemäß weist diese Kennung der Verschiebekraft über dem Verschiebeweg einen überwiegend fallenden Verlauf auf, so dass seitens der vorderen Kardanwelle 5 keinerlei negativen Rückwirkungen auf die in dem Fahrzeug 1 untergebrachten Insassen zu erwarten sind. Unterschieden werden können eine erste Phase, in der nach der Aufhebung der Axialfixierung die Schiebeverzahnung 6 noch in Eingriff ist und sich dementsprechend vorgegebene Kraft-Weg-Verläufe einstellen, und eine zweite Phase, in der die Verzahnungen 6i und 6a nicht mehr in Eingriff sind, so dass die Wellenelemente 5i,5a nahezu ungedämpft aneinander vorbei gleiten. Beide Phasen sind erfindungsgemäß reibungsarm ausgelegt. Zumindest die erste Phase weist den fallenden Kraft-Weg-Verlauf auf. In der zweiten Phase kann der Verlauf ggf. auch konstant oder auf geringem Niveau leicht ansteigend sein, ohne dabei aber das Kraft-Niveau der ersten Phase wieder zu erreichen.

Die Wülste können zur Einstellung einer bestimmten Kennung auch als Querwülste auf dem Umfang verteilt angeordnet werden. Bei einer Ausführung als Längswulst kann ein kontinuierlicher Verlauf (siehe Figur 8) oder eine segmentartige Anordnung mehrerer Wülste hintereinander vorgesehen sein.

Bei einer Anordnung mehrer Wülste kann auch vorgesehen sein, dass zumindest eine der Wülste eine Klemmwulst zur Bereitstellung der Axialfixierung ist und andere Wülste zur Vorgabe einer bestimmten Kennung über dem Verschiebeweg ausgelegt sind. Diese Wülste können dem inneren und/oder äußeren Wellenelement 5i bzw. 5a zugeordnet sein.

Zur Einstellung der Kennung kann neben der Form der Längswülste auch deren radiale Verteilung auf dem Umfang der Wellenelemente 5i und/oder 5a variiert werden.

Der Einsatz der erfindungsgemäßen Wellenanordnung ist nicht auf das in der Figur 1 ersichtliche Fahrzeugkonzept beschränkt, sondern kann auch für andere Antriebskonfigurationen - beispielsweise mit einer durchgehenden Kardanwelle - gewählt werden.

## Patentansprüche

1. Teleskopierbare Wellenanordnung mit wenigstens zwei ineinander verschiebbaren Wellenelementen, die als inneres Wellenelement (5i) einerseits und als äußeres Wellenelement (5a) andererseits über wenigstens eine Schiebeverzahnung (6) drehmomentenübertragend miteinander verbunden sind, wobei
- nach Art einer Sollbruchstelle eine Axialfixierung (14, 14', 15) zwischen den Wellenelementen (5i, 5a) vorgesehen ist, die bei Erreichen einer in Teleskopierrichtung wirkenden, vorgegebenen Stoßkraft wirkungslos ist,
- nach Wirkungslosigkeit der Axialfixierung die Wellenelemente (5i,5a) entlang der Schiebeverzahnung (6) unter Wirkung der Stoßkraft reibungsarm gegeneinander bewegbar sind,
**dadurch gekennzeichnet, dass**
in der Schiebeverzahnung (6) wenigstens eine Wulst (14; 14', 15), vorgesehen ist, durch die für die verschiebende Stoßkraft über den Verschiebeweg hinweg ein vorgegebener Kraft-Weg-Verlauf nach dem Lösen der Axialfixierung einstellbar ist.

2. Wellenanordnung nach Anspruch 1, **dadurch gekennzeichnet, dass** die Dimensionierung der wenigstens einen Wulst (14, 14', 15) so gewählt ist, dass die Verschiebekraft über den Verschiebeweg einen fallenden Verlauf aufweist.

3. Wellenanordnung nach Anspruch 1 oder 2, **dadurch gekennzeichnet, dass** die Axialfixierung durch eine Klebung (25) und/oder Schweißung (25) und/oder Verstemmung und/oder Abscher-Elementen-Kombination (24) und/oder Reibabschnitte (14') in der Schiebeverzahnung (6) und/oder dergleichen gebildet ist.

4. Wellenanordnung nach wenigstens einem der vorhergehenden Ansprüche, **dadurch gekennzeichnet, dass** das äußere Wellenelement (5a) auf seiner dem inneren Wellenelement (5i) abgewandten Seite eine Verjüngung (26) aufweist, durch die eine stoßkraftbedingte Verlagerung des inneren Wellenelementes(5i) innerhalb des äußeren Wellenelementes (5a) nach Art eines Anschlages begrenzbar ist.

5. Wellenanordnung nach wenigstens einem der vorhergehenden Ansprüche, **dadurch gekennzeichnet, dass** das innere Wellenelement (5i) auf seiner dem äußeren Wellenelement (5a) abgewandten Seite einen verzahnungsfreien Abschnitt (11) aufweist, dessen Außendurchmesser (DIA) zur ungehinderten Bewegung des äußeren Wellenelementes (5a) über das innere Wellenelement (5i) hinweg kleiner ist als der Fußkreisdurchmesser (DAF) der Verzahnung (6a) des äußeren Wellenelementes (5a).

6. Wellenanordnung nach wenigstens einem der vorhergehenden Ansprüche, **dadurch gekennzeichnet, dass** die Verzahnungsabschnitte (6i, 6a) der Wellenelemente (5i, 5a) zur Drehmomentenübertragung nahezu spielfrei zueinander angeordnet sind.

7. Wellenanordnung nach wenigstens einem der vorhergehenden Ansprüche, **dadurch gekennzeichnet, dass** bei dem inneren Wellenelement (5i) der Durchmesser (DIF) des Fußkreises der Verzahnung (6i) größer ist als der Außendurchmesser (DIA) des sich an die Verzahnung (6i) anschließenden verzahnungsfreien Abschnittes (11) des inneren Wellenelementes (5i).

8. Wellenanordnung nach wenigstens einem der vorhergehenden Ansprüche, **dadurch gekennzeichnet, dass** die Verzahnung (6i) des inneren Wellenelementes (5i) an dessen dem äußeren Wellenelement (5a) zugewandtem Ende offen auslaufend ist.

9. Wellenanordnung nach wenigstens einem der vorhergehenden Ansprüche, **dadurch gekennzeichnet, dass** bei dem äußeren Wellenelement (5a) der Innendurchmesser (DAI) des verzahnungsfreien Abschnittes größer ist als der Kopfkreisdurchmesser (DIK) an der Verzahnung (6i) des inneren Wellenelementes (5i).

10. Wellenanordnung nach wenigstens einem der vorhergehenden Ansprüche, **dadurch gekennzeichnet, dass** bei wirksamer Axialfixierung zwischen einem Verzahnungsauslauf (9) an einem freien Ende (5e) des äußeren Wellenelementes (5a) und einem verzahnungsfreien Abschnitt (11) des inneren Wellenelementes (5i) ein Ringspalt (12) gebildet ist, der zumindest im Bereich des freien Endes (5e) des äußeren Wellenelementes (5a) zumindest teilweise mit einem Dichtmittel (13) ausgefüllt ist.

11. Wellenanordnung nach Anspruch 10, **dadurch gekennzeichnet, dass** der Ringspalt (12) durch das Dichtmittel (13) abgedichtet ist.

12. Wellenanordnung nach Anspruch 10 oder 11, **dadurch gekennzeichnet, dass** das Dichtmittel (13) ein Dichtring oder ein gestaltloses Dichtmittel nach Art einer Dichtschnur, einer Paste oder eines Gels ist.

## Claims

1. Telescopable shaft arrangement having at least two shaft elements capable of sliding in one another which, as internal shaft element (5i) on the one hand and as outer shaft element (5a) on the other hand, are connected to one another in torque transmitting manner via at least one sliding splined portion (6),
- an axial fixation (14, 14', 15) being provided, in the manner of a predetermined breaking point between the shaft elements (5i, 5a), said axial fixation becoming ineffective once a predetermined impact force acting in the direction of telescoping is reached,
- the shaft elements (5i, 5a) being movable relative to one another, once the axial fixation has become ineffective, in low-friction manner along the sliding splined portion (6) under the action of the impact force,
**characterized in that,**
at least one bead (14, 14', 15) is provided in the sliding splined portion (6), by means of which bead a predetermined force/travel profile over the displacement path for the displacing impact force may be established once the axial fixation has become unfastened.

2. Shaft arrangement according to Claim 1, **characterized in that** the dimensions of the at least one bead (14, 14', 15) are selected such that the displacement force exhibits a declining profile over the displacement path.

3. Shaft arrangement according to Claim 1 or 2, **characterized in that** the axial fixation is formed by an adhesive bond (25) and/or weld (25) and/or calking and/or a combination of shear elements (24) and/or frictional portions (14') in the sliding splined portion (6) and/or the like.

4. Shaft arrangement according to at least one of the preceding claims, **characterized in that** the outer shaft element (5a) comprises a taper (26) on its end remote from the inner shaft element (5i), by means of which taper it is possible to limit movement, determined by an impact force, of the inner shaft element (5i) within the outer shaft element (5a) in the manner of a limit stop.

5. Shaft arrangement according to at least one of the preceding claims, **characterized in that** the inner shaft element (5i) comprises an unsplined portion (11) on its end remote from the outer shaft element (5a), the external diameter (DIA) of which unsplined portion is smaller than the root diameter (DAF) of the splined portion (6a) of the outer shaft element (5a) to permit unimpeded movement of the outer shaft element (5a) through the inner shaft element (5i).

6. Shaft arrangement according to at least one of the preceding claims, **characterized in that**, for the purpose of torque transmission, the splined portions (6i, 6a) of the shaft elements (5i, 5a) are arranged relative to one another virtually without backlash.

7. Shaft arrangement according to at least one of the preceding claims, **characterized in that,** on the inner shaft element (5i), the diameter (DIF) of the root circle of the splined portion (6i) is greater than the external diameter (DIA) of the unsplined portion (11) of the inner shaft element (5i) following on from the splined portion (6i).

8. Shaft arrangement according to at least one of the preceding claims, **characterized in that** the splined portion (6i) of the inner shaft element (5i) runs out in open manner at its end facing the outer shaft element (5a).

9. Shaft arrangement according to at least one of the preceding claims, **characterized in that,** on the outer shaft element (5a), the internal diameter (DAI) of the unsplined portion is greater than the tip diameter (DIK) on the splined portion (6i) of the inner shaft element (5i).

10. Shaft arrangement according to at least one of the preceding claims, **characterized in that,** when the axial fixation is effective, an annular gap (12) is formed between a splined portion runout (9) on a free end (5e) of the outer shaft element (5a) and an unsplined portion (11) of the inner shaft element (5i), which annular gap, at least in the area of the free end (5e) of the outer shaft element (5a), is at least partially filled with a sealant (13).

11. Shaft arrangement according to Claim 10, **characterized in that** the annular gap (12) is sealed by the sealant (13).

12. Shaft arrangement according to claim 10 or 11, **characterized in that** the sealant (13) is a sealing ring or a formless sealant of the sealing cord, paste or gel type.

## Revendications

1. Agencement de tubes télescopables comprenant au moins deux éléments de tube pouvant coulisser l'un dans l'autre, qui sont connectés l'un à l'autre en tant qu'élément de tube interne (5i) d'une part et élément de tube externe (5a) d'autre part, avec une transmission de couple par le biais d'au moins une denture coulissante (6),
dans lequel :
- une fixation axiale (14, 14', 15) est prévue entre les éléments de tube (5i, 5a) à la manière d'un point destiné à la rupture, laquelle est sans action une fois qu'une force d'impact prédéfinie agissant dans la direction de télescopage est atteinte,
- une fois que la fixation axiale est désactivée, les éléments de tube (5i, 5a) peuvent être déplacés sans frottement l'un contre l'autre le long de la denture coulissante (6) sous l'effet de la force d'impact,
**caractérisé en ce que**
dans la denture coulissante (6) est prévu au moins un bourrelet (14 ; 14', 15) qui permet d'ajuster une courbe force-distance prédéfinie sur la course de coulissement pour la force d'impact de coulissement après la libération de la fixation axiale.

2. Agencement de tubes selon la revendication 1, **caractérisé en ce que** le dimensionnement de l'au moins un bourrelet (14; 14', 15) est choisi de telle sorte que la force de coulissement présente, sur la course de coulissement, une courbe descendante.

3. Agencement de tubes selon la revendication 1 ou 2, **caractérisé en ce que** la fixation axiale est formée par un collage (25) et/ou un soudage (25) et/ou un matage et/ou une combinaison d'éléments de cisaillement (24) et/ou des portions de frottement (14') dans la denture coulissante (6) et/ou similaire.

4. Agencement de tubes selon au moins l'une quelconque des revendications précédentes, **caractérisé en ce que** l'élément de tube externe (5a) présente sur son côté opposé à l'élément de tube interne (5i) un rétrécissement (26) qui permet de limiter à la manière d'une butée un décalage de l'élément de tube interne (5i) provoqué par la force d'impact à l'intérieur de l'élément de tube externe (5a).

5. Agencement de tubes selon au moins l'une quelconque des revendications précédentes, **caractérisé en ce que** l'élément de tube interne (5i) présente, sur son côté opposé à l'élément de tube externe (5a), une portion sans denture (11), dont le diamètre extérieur (DIA) est plus petit que le diamètre du cercle de base (DAF) de la denture (6a) de l'élément de tube externe (5a) pour permettre le déplacement sans obstacle de l'élément de tube externe (5a) sur l'élément de tube interne (5i).

6. Agencement de tubes selon au moins l'une quelconque des revendications précédentes, **caractérisé en ce que** les portions de denture (6i, 6a) des éléments de tube (5i, 5a) sont disposées pratiquement sans jeu l'une par rapport à l'autre en vue du transfert de couple.

7. Agencement de tubes selon au moins l'une quelconque des revendications précédentes, **caractérisé en ce que** dans le cas de l'élément de tube interne (5i), le diamètre (DIF) du cercle de base de la denture (6i) est supérieur au diamètre extérieur (DIA) de la portion (11) sans denture de l'élément de tube interne (5i) se raccordant à la denture (6i).

8. Agencement de tubes selon au moins l'une quelconque des revendications précédentes, **caractérisé en ce que** la denture (6i) de l'élément de tube interne (5i) se termine de manière ouverte au niveau de son extrémité tournée vers l'élément de tube externe (5a).

9. Agencement de tubes selon au moins l'une quelconque des revendications précédentes, **caractérisé en ce que** dans le cas de l'élément de tube externe (5a), le diamètre intérieur (DAI) de la portion sans denture est supérieur au diamètre du cercle de tête (DIK) au niveau de la denture (6i) de l'élément de tube interne (5i).

10. Agencement de tubes selon au moins l'une quelconque des revendications précédentes, **caractérisé en ce que** dans le cas de la fixation axiale active entre une fin de denture (9) au niveau d'une extrémité libre (5e) de l'élément de tube extérieur (5a) et une portion sans denture (11) de l'élément de tube interne (5i), il est formé une fente annulaire (12) qui est au moins remplie en partie d'un moyen d'étanchéité (13) au moins dans la région de l'extrémité libre (5e) de l'élément de tube externe (5a).

11. Agencement de tubes selon la revendication 10, **caractérisé en ce que** la fente annulaire (12) est fermée hermétiquement par le moyen d'étanchéité (13).

12. Agencement de tubes selon la revendication 10 ou 11, **caractérisé en ce que** le moyen d'étanchéité (13) est une bague d'étanchéité ou un moyen d'étanchéité sans forme, comme un boudin d'étanchéité, une pâte ou un gel.
